# EUROPEAN PATENT SPECIFICATION

(11) **EP 1 790 213 B1**
(45) Date of publication and mention of the grant of the patent: **05.08.2009**
(21) Application number: 06076990.8
(22) Date of filing: 08.11.2006
(51) Int. Cl.: A01G 9/22

(54) **Greenhouse**
Gewächshaus
Serre

(30) Priority: 18.11.2005 NL 1030465
(43) Date of publication of application: 30.05.2007
(73) Proprietor: Metaal- en Kunststoffen Industrie Snelder B.V., 3565 BB Utrecht (NL)
(72) Inventor: Van Roest, Willem Cornelis, 3401 HC Ijsselstein (NL)
(74) Representative: Hylarides, Paul Jacques

(56) References cited:
- EP-A- 0 920 800
- WO-A-94/22288
- US-A- 3 668 302
- US-A- 3 996 142

## Description

The present invention relates to a glasshouse or greenhouse comprising a number of uprights with substantially parallel stationary beams mounted thereon, at least one displaceable profile positioned between adjacent stationary beams, a fabric attached to a stationary beam and the displaceable profile to enable screening of the interior of the glasshouse or the greenhouse, drive means for displacing the displaceable profile between an opened and a closed position, and a number of span wires tensioned between adjacent stationary beams for the purpose of holding the fabric in place.

Such glasshouses or greenhouses, referred to hereinafter simply as greenhouses or production greenhouses, are generally known, for instance from Netherlands patent application NL 1 009 668, and are often applied in vegetable and plant cultivation. In such greenhouses the fabric or screen is used to protect plants in the greenhouse from excessive solar radiation and/or to save energy. The fabric can be carried as in EP-A-0 920 800, where a carrier element is mounted on a pull rope and is connected to the fabric, wherein the construction is such that when a predetermined force, being exerted on the fabric, is exceeded, the pull rope will slip with respect to the carrier element.

As a result of the increasingly stringent safety requirements such glasshouses are sometimes provided with a fabric screen with flame-retardant properties. Such a fabric screen can for instance be manufactured from flame-retardant material as for instance known from the European document EP 0 696 884 B1. The retardancy is hereby hopefully sufficient to allow evacuation of the greenhouse and alerting of the fire brigade. Fabric screens manufactured from flame-retardant material are however expensive and are therefore little used in production greenhouses.

Fabric screens are further known which are often provided with standard, non-flame-retardant material, but wherein a fabric screen strip of flame-retardant material with a width of for instance 40 cm is manufactured close to the connection of the fabric screen to the beams, i.e. on the one side on the stationary beam and on the other the displaceable profile. If fire were to break out, the part of the fabric screen between said strips would go up in flames, but an attempt is made with the strips to prevent a fire from spreading to a subsequent fabric screen. The idea is that a fire thus remains limited to a single fabric screen in the area covered by the fabric screen in question, so that the other areas of the greenhouse associated with other fabric screens are spared.

It has however been found in practice that the fabric screens manufactured wholly or partially from flame-retardant material offer too little protection. Despite the fact that flame-retardant material is applied, it has been found that a large part of the greenhouse often still goes up in flames.

A further drawback of the known greenhouses has to do with the use of so-called span wires. Cables or wires are tensioned between stationary beams of the greenhouse. Span wires are provided some distance below the fabric screen to prevent sagging of the fabric and/or span wires are provided some distance above the fabric screen to hold the fabric screen in place when it is blown up by the wind. Such span wires are tensioned between the beams under considerable bias. This means that, when a fire breaks out and a span wire catches fire, the span wire snaps loose with great force at a given moment when it is burnt through. The span wire snapping loose can be very dangerous for persons present in the greenhouse. The span wires are after all thrown in random directions at high speed, and can cause serious injuries.

It is an object of the present invention to provide an improved glasshouse in which at least the above stated drawbacks are obviated.

This object is achieved in a glasshouse or greenhouse of the above stated type, wherein the span wires are manufactured from flame-retardant plastic so as to avoid snapping of the span wires in a fire. By manufacturing the span wires from flame-retardant material there is a reduced chance of the wires catching fire and breaking during a fire, with all the consequences this entails.

The invention is also based on the surprising insight that, despite the application of fabric screens of flame-retardant material, fires can spread from one fabric screen to the other or from a fabric screen to another flammable part of the greenhouse as a result of the burning span wires snapping loose. Because a burning span wire snaps and shoots off in random directions as a result of the bias, a burning end of the span wire can for instance come to lie on an adjacent fabric screen that is not yet burning, and set this fabric screen alight. This manner of a fire being spread in a greenhouse is prevented by manufacturing the span wires from flame-retardant material.

According to a determined preferred embodiment, the plastic is not only flame-retardant but also flame-extinguishing. Although during a fire the material does in some cases catch fire after having been exposed to the fire for a determined time, the material extinguishes the flames quickly. This further reduces the chance that, having snapped, the wire causes the fire to spread to a subsequent screen.

According to a determined further preferred embodiment, the plastic is a polyester with an additive of zinc salt and diethyl phosphoric acid. The plastic is preferably polyester with a Cesa®-flam additive.

Further advantages, features and details of the present invention will be elucidated on the basis of the following description of a preferred embodiment thereof. Reference is made in the description to the accompanying figures, in which:
figure 1 shows a perspective view of a greenhouse provided with a preferred embodiment of the invention; and
figure 2 is a more detailed perspective view of the displacing mechanism of the embodiment shown in figure 1.

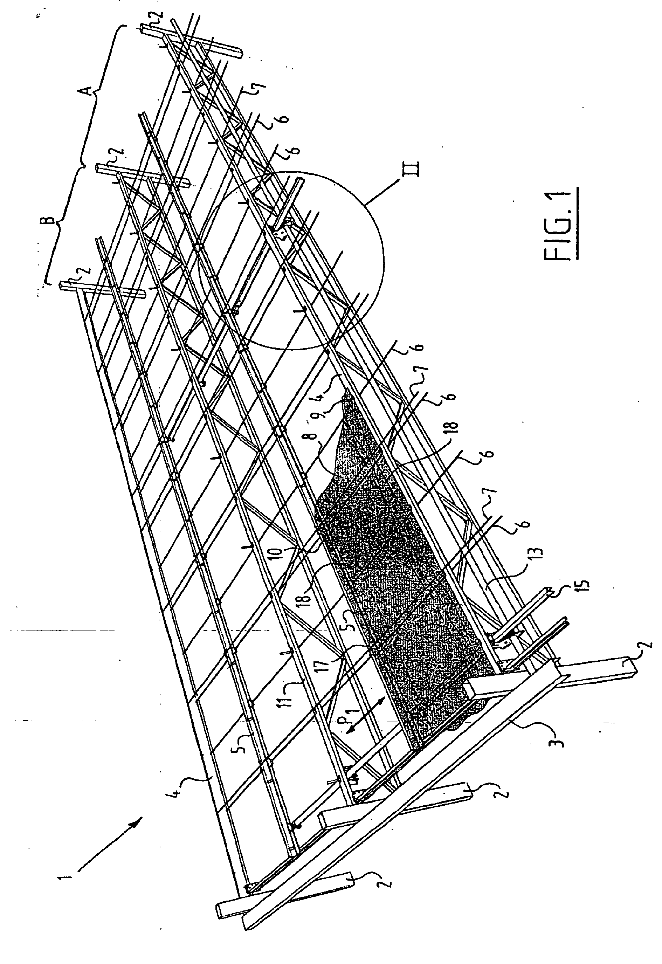

Figure 1 shows a screen installation 1 of the so-called pull-push type. This type of greenhouse is commonly applied for cultivating plants under conditioned circumstances. In greenhouses of such a type the fabric is opened and closed using a pull-push system, as set forth below.

The greenhouse is constructed from a number of uprights 2 which are placed on a ground surface and between which are mounted cross beams 3 and a number of parallel stationary main beams 4 and stationary intermediate beams 11. Fabric screens 8 (of which only one is shown for clarity of description in figure 1) are fastened to a stationary main beam 4 using clips 9. On the opposite side the fabric screen 8 is fastened to a non-stationary, or displaceable, profile 5 using clips 10. Displaceable profile 5 can be moved reciprocally (direction P₁) in order to open and close the fabric screen.

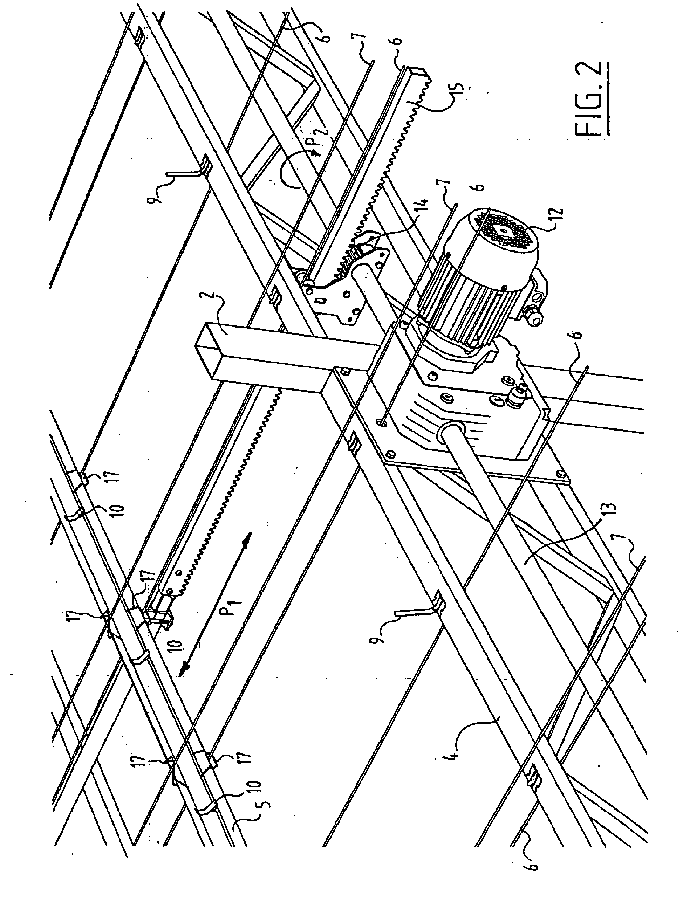

Figure 2 shows in more detail a preferred embodiment of an operating mechanism for opening and closing fabric screen 8 (for the sake of simplicity not shown in figure 2). Shown is an electric motor 12, which is powered via the domestic mains electricity and which is coupled to a drive shaft 13 using a transmission system (shown schematically). Electric motor 12 can cause drive shaft 13 to rotate to the left or right. A pinion 14 which can engage on a rack 15 is provided on drive shaft 13. Rack 15 can be displaced in a direction transversely of beam 4 and, since an outer end thereof is mounted on the non-stationary displaceable profile 5, is suitable for moving the displaceable profile 5 reciprocally in the desired direction (P₁). In the shown situation rack 15 will move to the right when shaft 13 is rotated in clockwise direction (P₂), as a result of which the screen is opened. Rack 15 will likewise be displaced to the left in the case of a counter-clockwise rotation, as a result of which screen 8 is closed.

In order to protect the screen against sagging a number of lower span wires 6 is provided at a constant mutual distance just below screen 8. The diameter of such span wires can vary depending on the type and size of the greenhouse, but has a characteristic value of about 2 mm. Span wires 6 are attached fixedly to main beams 4 and intermediate beams 11 and mounted guidably on displaceable profile 5 using clips 17. The span wires are tensioned at a predetermined tensile force, preferably at least a tensile force of about 250-500 N, in order to provide sufficient support against sagging of screen 8.

A number of span wires 7 is likewise mounted at fixed mutual distances above screen 8. These span wires have the function of holding the fabric in place when it is pushed upward as a result of air circulation in the greenhouse, for instance due to wind entering the greenhouse via opened windows. These span wires are also fixedly attached with their outer ends to main beams 4, and are supported at the position of displaceable profiles 5 using the same clips 17.

If screen 8 is manufactured from standard non-flame-retardant material, the screen material 8 will burn away wholly or partially if fire breaks out. Span wires 6 and 7 are however manufactured from flame-retardant material and in most cases remain intact, so that there is no danger of span wires breaking away. The burning fabric screen furthermore remains neatly enclosed between the intact span wires so that the screen does not fall downward (or is not displaced upward by the wind). This reduces the chance of the burning screen spreading the fire to another part of the greenhouse.

If the fire persists for a longer period of time, the situation may occur that one or more span wires 6 will nevertheless snap. Such a situation will however only occur after some considerable time, so that staff in the greenhouse will have had sufficient time to leave the greenhouse.

When the flame-retardant span wires are applied in combination with fabric screen which is equipped with one or more of the above stated flame-retardant strips 18 (shown with broken lines in figure 1), this means that a fire possibly starting in area A (figure 1), i.e. the area between right-hand beam 4 and intermediate beam 11, remains limited to area A and does not spread to a subsequent area, for instance area B between left-hand beam 4 and intermediate beam 11. This means that the damage to the greenhouse remains limited without the greenhouse having to be provided with a fabric screen manufactured wholly from flame-retardant plastic, which is in any event relatively expensive.

The span wires are preferably manufactured from polyester with a Cesa® masterbatch additive (8% additive level) in order to impart the necessary flame-extinguishing and flame-retardant properties to the span wire. The type of additive is for instance Cesa®-flam nba 0050115-zt from Clariant. This additive gives the span wire the property that flame extinguishing already occurs after about 3 to 4 seconds.

It will be apparent to the skilled person that the invention can also be applied to screen installations and greenhouses of a different type, for instance screen installations of the pull wire type. Here an electric motor does not drive the displaceable profile by means of a pull-push rod (pinion/rack combination) but using pull cords engaging on the displaceable profile. If the greenhouses are provided with span wires the invention can also be applied on vertically or obliquely positioned fabric screens.

The present invention is not limited to the preferred embodiments thereof described herein. The rights sought are rather defined by the following claims, within the scope of which many modifications can be envisaged.

## Claims

1. Glasshouse (1) or greenhouse (1), comprising a number of uprights (2) with substantially parallel stationary beams (3, 4, 11) mounted thereon, at least one displaceable profile (5) positioned between adjacent stationary beams (4, 11), a fabric (8) attached to a stationary beam (4, 11) and the displaceable profile (5) to enable screening of the interior of the glasshouse (1) or the greenhouse (1), drive means for displacing the displaceable profile (5) between an opened and a closed position, a number of span wires (6, 7) tensioned between adjacent stationary beams (4, 11) for the purpose of holding the fabric (8) in place, **characterized in that** the span wires (6, 7) are manufactured from flame-retardant plastic so as to avoid snapping of the span wires (6, 7) in a fire.

2. Glasshouse (1) as claimed in claim 1, wherein the plastic (6, 7) is flame-extinguishing.

3. Glasshouse (1) as claimed in claim 1 or 2, wherein the plastic (6, 7) is a polyester with an additive of zinc salt and diethyl phosphoric acid.

4. Glasshouse (1) as claimed in claim 1, 2 or 3, wherein the plastic (6, 7) is a polyester with an additive of zinc salt and diethyl phosphoric acid.

5. Glasshouse (1) as claimed in claim 1, comprising a number of span wires (6, 7) positioned under the fabric (8) and/or above the fabric (8).

6. Glasshouse (1) as claimed in any of the foregoing claims, wherein the tensile force of the span wires (6, 7) amounts to at least about 250-500 N.

7. Glasshouse (1) as claimed in any of the foregoing claims, wherein the fabric (8) is at least partially manufactured from flame-retardant material.

8. Glasshouse (1) as claimed in claim 7, wherein only a strip (18) of the fabric (8) close to the stationary beam (4, 11) and a strip (18) close to the displaceable profile (5) is manufactured from flame-retardant material so as to prevent flame spreading to a subsequent fabric.

9. Glasshouse (1) as claimed in any of the foregoing claims, wherein the drive means comprise a pull-push rod (15) which is to be operated with an electric motor (12) and with which the displaceable profile (5) can be displaced.

10. Glasshouse (1) as claimed in any of the claims 1-8, wherein the drive means comprise an electric motor (12) and a number of pull cords which engage on either side of the displaceable profile (5) and with which the displaceable profile (5) can be displaced.

11. Glasshouse (1) as claimed in any of the foregoing claims, wherein the span wires (6, 7) extend substantially transversely of the beams (4, 11) and at substantially equal intermediate distances.

12. Use of flame-retardant plastic span wires (6, 7) in a glasshouse (1) or greenhouse (1) as claimed in any of the foregoing claims.

## Patentansprüche

1. Glashaus (1) oder Gewächshaus (1), mit einer Anzahl von Pfosten (2) mit daran montierten, im Wesentlichen parallelen, stationären Balken (3, 4, 11), wenigstens einem verschiebbaren Profil (5), das zwischen benachbarten stationären Balken (4, 11) positioniert ist, einem Stoff (8), der an einem stationären Balken (4, 11) und dem verschiebbaren Profil (5) befestigt ist, um das Innere des Glashauses (1) oder Gewächshauses (1) abschirmen zu können, einer Antriebseinrichtung zum Verschieben des verschiebbaren Profils (5) zwischen einer offenen und einer geschlossenen Position, einer Anzahl von Spanndrähten (6, 7), die zwischen benachbarten stationären Balken (4, 11) gespannt sind, um den Stoff (8) an Ort und Stelle zu halten, **dadurch gekennzeichnet, dass** die Spanndrähte (6, 7) aus flammenhemmendem Kunststoff hergestellt sind, um ein Reißen der Spanndrähte (6, 7) bei einem Brand zu vermeiden.

2. Glashaus (1) nach Anspruch 1, wobei der Kunststoff (6, 7) flammenlöschend ist.

3. Glashaus (1) nach Anspruch 1 oder 2, wobei der Kunststoff (6, 7) ein Polyester mit einem Zusatz von Zinksalz und Diethylphosphorsäure ist.

4. Glashaus (1) nach Anspruch 1, 2 oder 3, wobei der Kunststoff (6, 7) ein Polyester mit einem Zusatz von Zinksalz und Diethylphosphorsäure ist.

5. Glashaus (1) nach Anspruch 1, mit einer Anzahl von Spanndrähten (6, 7), die unterhalb des Stoffes (8) und/oder oberhalb des Stoffes (8) positioniert sind.

6. Glashaus (1) nach einem der vorstehenden Ansprüche, wobei die Zugkraft der Spanndrähte (6, 7) wenigstens ungefähr 250 - 500 N beträgt.

7. Glashaus (1) nach einem der vorstehenden Ansprüche, wobei der Stoff (8) wenigstens teilweise aus flammenhemmendem Material hergestellt ist.

8. Glashaus (1) nach Anspruch 7, wobei nur ein Streifen (18) des Stoffes (8) nahe dem stationären Balken (4, 11) und ein Streifen (18) nahe dem verschiebbaren Profil (5) aus flammenhemmendem Material hergestellt ist, um ein Ausbreiten der Flamme auf das benachbarte Gewebe zu verhindern.

9. Glashaus (1) nach einem der vorstehenden Ansprüche, wobei die Antriebseinrichtung eine Zudruck-Stange (15) aufweist, die mit einem Elektromotor (12) bedient wird, und mit der das verschiebbare Profil (5) verschoben werden kann.

10. Glashaus (1) nach einem der Ansprüche 1 bis 8, wobei die Antriebseinrichtung einen Elektromotor (12) und eine Anzahl von Zugseilen aufweist, die mit beiden Seiten des verschiebbaren Profils (5) in Eingriff stehen, und mit welchen das verschiebbare Profil (5) verschoben werden kann.

11. Glashaus (1) nach einem der vorstehenden Ansprüche, wobei die Spanndrähte (6, 7) sich im Wesentlichen quer zu den Balken (4, 11) und im Wesentlichen mit gleichen Zwischenabständen erstrecken.

12. Verwendung von flammenhemmenden Kunststoffspanndrähten (6, 7) in einem Glashaus (1) oder Gewächshaus (1) wie nach einem der vorstehenden Ansprüche beansprucht.

## Revendications

1. Serre (1) ou abri (1) comprenant un certain
nombre de montants (2) avec des poutres fixes sensiblement parallèles (3, 4, 11) montées dessus, au moins un profilé mobile (5) positionné entre des poutres fixes adjacentes (4, 11), un tissu (8) fixé à une poutre fixe (4, 11) et au profilé mobile (5) pour permettre la protection de l'intérieur de la serre (1) ou abri (1), des moyens de commande pour déplacer le profilé mobile (5) entre une position ouverte et fermée, un certain nombre de fils (6, 7) tendus entre des poutres fixes adjacentes (4, 11) dans le but de maintenir le tissu (8) en place, **caractérisé en ce que** les fils (6, 7) sont fabriqués en plastique ignifuge de façon à éviter le happage des fils (6, 7) dans un incendie.

2. Serre (1) selon la revendication 1, dans
laquelle le plastique (6, 7) est ignifuge.

3. Serre (1) selon la revendication 1 ou 2, dans
laquelle le plastique (6, 7) est un polyester avec un additif de sel de zinc et d'acide diéthyl-phosphorique.

4. Serre (1) selon la revendication 1, 2 ou 3,
dans laquelle le plastique (6, 7) est un polyester avec un additif de sel de zinc et d'acide diéthyl-phosphorique.

5. Serre (1) selon la revendication 1, comprenant
un certain nombre de fils (6, 7) positionnés sous le tissu (8) et/ou au dessus du tissu (8).

6. Serre (1) selon l'une quelconque des
revendications précédentes, dans laquelle la force de traction des fils (6, 7) est d'au moins environ 250-500 N.

7. Serre (1) selon l'une quelconque des
revendications précédentes, dans laquelle le tissu (8) est au moins partiellement fabriqué à partir de matériau ignifuge.

8. Serre (1) selon la revendication 7, dans
laquelle seule une bande (18) du tissu (8) proche de la poutre fixe (4, 11) et une bande (18) proche du profilé mobile (5) est fabriquée à partir de matériau ignifuge de façon à éviter la prolifération de flammes à un tissu successif.

9. Serre (1) selon l'une quelconque des
revendications précédentes, dans laquelle les moyens de commande comprennent une bielle va-et-vient (15) qui doit être actionnée avec un moteur électrique (12) et avec laquelle le profilé mobile (5) peut être déplacé.

10. Serre (1) selon l'une quelconque des
revendications 1-8 dans laquelle les moyens de commande comprennent un moteur électrique (12) et un certain nombre de cordons de traction qui se mettent en prise de chaque côté du profilé mobile (5) et avec lequel le profilé mobile (5) peut être déplacé.

11. Serre (1) selon l'une quelconque des
revendications précédentes, dans laquelle les fils (6, 7) s'étendent sensiblement transversalement des poutres (4, 11) et à des distances intermédiaires sensiblement égales.

12. Utilisation de fils en plastique ignifuge (6,
7) dans une serre (1) ou abri (1) selon l'une quelconque des revendications précédentes.
